# EUROPEAN PATENT APPLICATION

(11) **EP 1 589 550 A1**
(43) Date of publication of application: **26.10.2005**
(21) Application number: 04252310.0
(22) Date of filing: 20.04.2004
(51) Int. Cl.: H01H 3/20, H01H 9/06

(54) **Switch mechanism**

(71) Applicant: GMCA PTY Ltd, Victoria 3045 (AU)
(72) Inventor: Park, Keith, Ellerton, York YO42 4NX (GB)
(74) Representative: Tomkinson, Alexandra

(57) **Abstract**

A switch mechanism is provided for the actuation of an electrical switch, the electrical switch being movable between an on position, wherein electrical contact is made, and an off position, wherein no electrical contact is made. The switch mechanism includes a plunger which is movable between first and second positions to move said switch between said on and off positions respectively upon actuation thereof, and resilient biasing means for biasing the plunger for movement from said second position to said first position. The resilient biasing means are provided in a substantially compressed or biased form when plunger is in the second off position.

## Description

This invention relates to a switch mechanism.

It is often the case that due to safety requirements relating to use of certain items of electrical apparatus, such as power tools, lawnmowers and/or the like, switch mechanisms are provided on the apparatus for operational control thereof which move from an "on" condition to an "off" condition if a user removes their grip from the apparatus. This requirement is to prevent or minimise injury to the user due to the continued action of the apparatus if the user accidentally loses control thereof, such as for example if the user accidentally drops the tool, falls over when pushing a lawnmower and/or the like.

A further safety requirement of certain items of electrical apparatus is that means are provided which minimise the likelihood of the apparatus being accidentally switched on, such as a by a child. A number of switch mechanisms have been designed to overcome this problem and include the provision of two user actuation means which require operation substantially simultaneously, it being unlikely that both switch mechanisms could be simultaneously actuated accidentally.

An example of one such switch mechanism is disclosed in the applicants co-pending British applications no.0320923.6 and no. 0328499.9 in which an electrical switch is movable between an "on condition" and an "off condition" upon simultaneous actuation of levers and a button. A plunger member is provided between the button and the electrical switch. The plunger member includes a latch portion provided at a first end thereof which engages with a portion of the button, an actuating plate provided at an opposite end thereof which engages with a movable portion of the electrical switch, a lip portion which engages against tabs on the levers in one position to prevent movement of the plunger member in that position and a spring located on the plunger member between the lever tabs and the actuating plate. In use, a user is required to actuate the levers which causes the tabs to move towards the electrical switch, thereby releasing the engagement of the tabs and the lip on the plunger member, together with compression of the spring. This action alone does not result in actuation of the switch since the plunger member is still latched to the button and so cannot move. Depression of the button whilst maintaining actuation of the levers causes the latch portion to be released, thereby allowing movement of the plunger member towards the electrical switch. This movement, together with the biasing force of the compressed spring moves the actuation plate against the electrical switch, thereby moving the same to an "on condition". Release of the levers by the user causes the tabs to move the lip on the plunger member back to a non-operating condition and re-latches the plunger member with the button, thereby moving the electrical switch to an "off condition".

Whilst the above described switch mechanism is effective and provides safe and easy operation, it is an object of the present invention to provide am alternative switch mechanism which overcomes the abovementioned problems.

It is also an object of the present invention to provide a switch mechanism which allows quick and easy operation of the same without the user having to input significant force.

According to a first aspect of the present invention there is provided a switch mechanism for the actuation of an electrical switch, said electrical switch movable between an on position, wherein electrical contact is made, and an off position, wherein no electrical contact is made, said switch mechanism including switch actuating means which are movable between first and second positions to move said switch between said on and off positions respectively upon actuation thereof, and resilient biasing means for biasing the switch actuating means for movement from said second position to said first position, characterised in that said resilient biasing means are provided in a substantially compressed or biased form when the switch actuating means is in said second position.

Preferably the resilient biasing means are moved from said compressed or biased form to a relative substantially uncompressed or unbiased formed when the switch actuating means moves from said second position to said first position.

At least first user actuation means can be provided for releasable engagement with the switch actuating means. The at least first user actuation means require user actuation, at least in part, to move the switch actuating means from the second position to the first position, thereby moving the switch from the off position to the on position.

Preferably the resilient biasing means is provided a spaced distance apart from said at least first user actuation means. Thus, the user actuation means do not act directly on the biasing means in use of the switch mechanism and the biasing means are in a compressed condition prior to actuation of any user actuation means. This is different to prior art devices wherein the user actuation means often operates directly on the resilient biasing means to move the same into a compressed condition.

In one embodiment the resilient biasing means is provided between the switch actuating means and the electrical switch and/or between at least two portions of the switch actuating means.

Preferably the resilient biasing means is in the form of a spring.

Preferably said switch mechanism further includes second user actuation means. The second user actuation means typically require actuation in addition to said first user actuation means to allow said switch actuating means to move from said second position to said first position. Operation of the first and second user actuation means is typically required substantially simultaneously in order to move the switch actuating means and thus the electrical switch from an off condition to an on condition.

The resilient biasing means typically remain substantially stationary in the second position until both of the user actuation means have been actuated, whereupon the biasing means is then free to move under its biasing force.

Preferably said first and/or second user actuation means engages at least a portion of said switch actuating means and actuation of said user actuation means removes or reduces the engagement force with said switch actuating means to allow movement of said switch actuating means from said second position to said first position.

Preferably protruding lip means are provided on said switch actuating means against which a portion, for example in the form of one or more tabs, of said first and/or second user actuation means engages in said second position. Release of this engagement, at least in part, allows the switch actuating means to move to said first position.

The first and/or second user actuation means are movable between operational and non-operational positions and preferably further resilient biasing means are provided to bias the user actuation means to said non-operable position. Thus, when a user releases their grip on the first and/or second user actuation means, said means move to said non-operable position.

In one embodiment the second user actuation means are in the form of one or more levers. The levers are typically pivotally mounted on the switch assembly itself or on part of a housing on or adjacent which the switch assembly is located.

In one embodiment the first actuation means is in the form of a button. A user typically depresses the button to release engagement of the switch actuating means therewith. The resilient biasing means are associated with the button for biasing the button from a depressed or operational condition to the undepressed or non-operating condition.

In use of the switch mechanism, a user is required to actuate the first and second user actuation means substantially simultaneously, this releases engagement of the same with the switch actuating means. Thus, for example, the button is depressed, thereby releasing engagement of the latch portion with the same and the levers are squeezed/pulled, thereby releasing engagement of the tabs with the protruding lip means. The switch actuating means can then move under the biasing force of the resilient biasing means from a second position to a first position to move the electrical switch from an off position to an on position respectively.

On release of the first and/or second actuation means, the actuation means are biased to an out-of-operation position and re-engage with said switch actuating means. This causes said resilient biasing means to move from an uncompressed state to a compressed state. For example, release of the second actuation means alone can move the switch actuating means from the first position to the second position, thereby causing the spring to move to a more compressed state and causes the first actuation means to re-engage with the switch actuating means.

According to a second aspect of the present invention there is provided a method of using a switch mechanism.

According to a further aspect of the present invention there is provided a switch mechanism for the actuation of an electrical switch, said electrical switch movable between an on position, wherein electrical contact is made, and an off position, wherein no electrical contact is made, said switch mechanism including switch actuating means which are movable between first and second positions to move said electrical switch between said on and off positions respectively, at least first and second user actuation means for releasably engaging said switch actuating means, and resilient biasing means for biasing the switch actuating means for movement from said second position to said first position on actuation of said user actuation means, characterised in that said resilient biasing means remain substantially stationary until substantially simultaneous actuation of said first and second user actuation means.

According to a yet further aspect of the present invention there is provided a switch mechanism for the actuation of an electrical switch, said electrical switch movable between an on position, wherein electrical contact is made, and an off position, wherein no electrical contact is made, said switch mechanism including switch actuating means which are movable between first and second positions to move said electrical switch between said on and off positions respectively, at least first user actuation means for releasably engaging said switch actuating means, and resilient biasing means for biasing the switch actuating means for movement from said second position to said first position on actuation of said user actuation means, characterised in that said resilient biasing means are provided in a substantially compressed or biased form prior to actuation of said user actuation means.

The advantage of the present invention is that it provides an inexpensive switch mechanism which requires two levels of user actuation, thereby meeting the required safety standards. The two user actuation means are easy to operate and do not require a user to apply significant amounts of force to actuate the same.

An embodiment of the present invention will now be described with reference to the accompanying figures, wherein:
Figure 1a is a partially exploded view from below of a switch mechanism according to one embodiment of the present invention with the base of the housing removed;
Figure 1b is an exploded view from above of the switch mechanism is figure 1a;
Figure 2a is a perspective view of the assembled switch mechanism in figure 1a with the base of the housing removed;
Figure 2b is a perspective view of the assembled switch mechanism;
Figure 3a is a plan view from below of the assembled switch mechanism in a start position;
Figure 3b is a cross sectional view of the switch mechanism in figure 3a;
Figure 4a illustrates the switch mechanism in figure 3a with the button depressed but without actuation of the levers;
Figure 4b is a cross sectional view of the switch mechanism in figure 4a;
Figure 5a illustrates the switch mechanism in figure 4a with the button depressed and the levers actuated;
Figure 5b is a cross sectional view of the switch mechanism in figure 5a;
Figure 6a illustrates the switch mechanism in figure 3a with the levers actuated but without the button depressed;
Figure 6b is a cross sectional view of the switch mechanism in figure 6a.

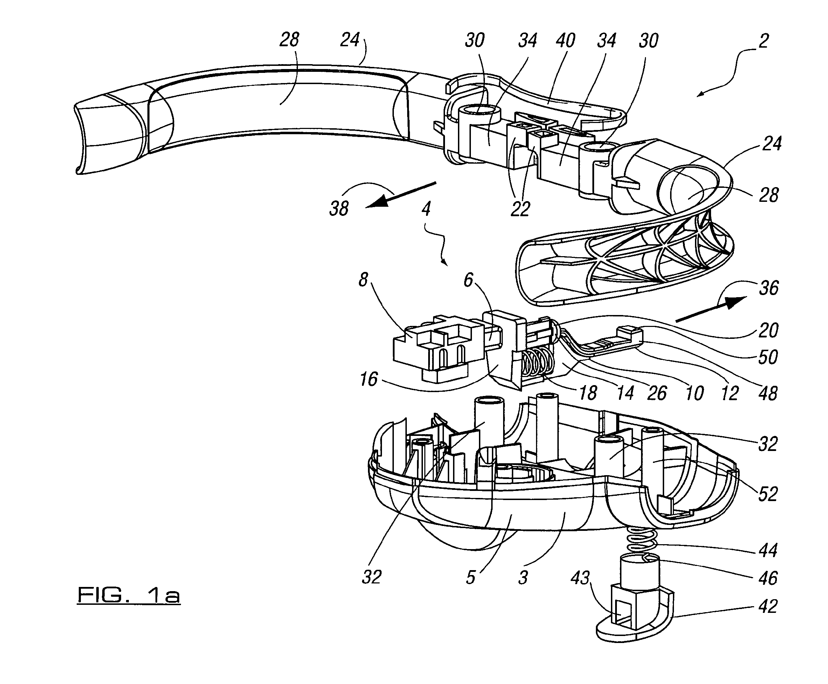

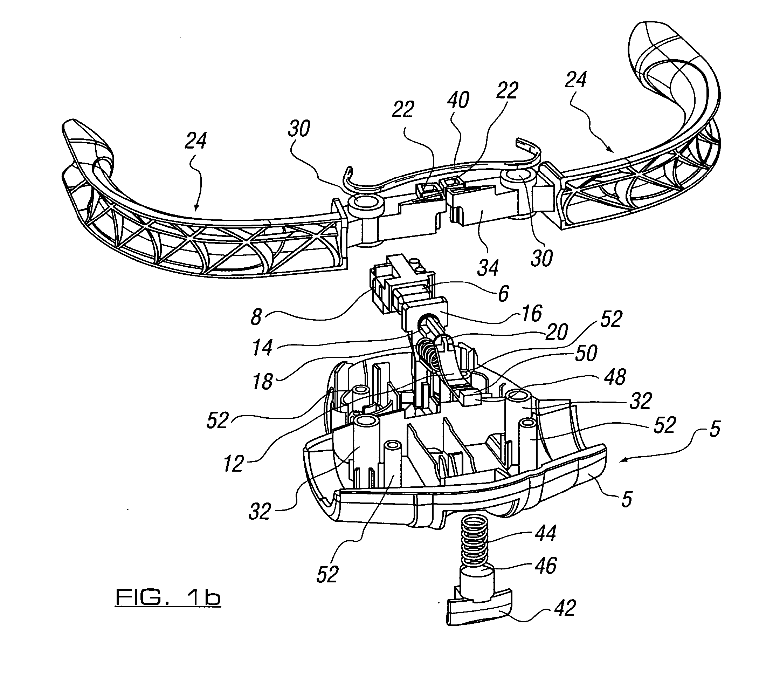

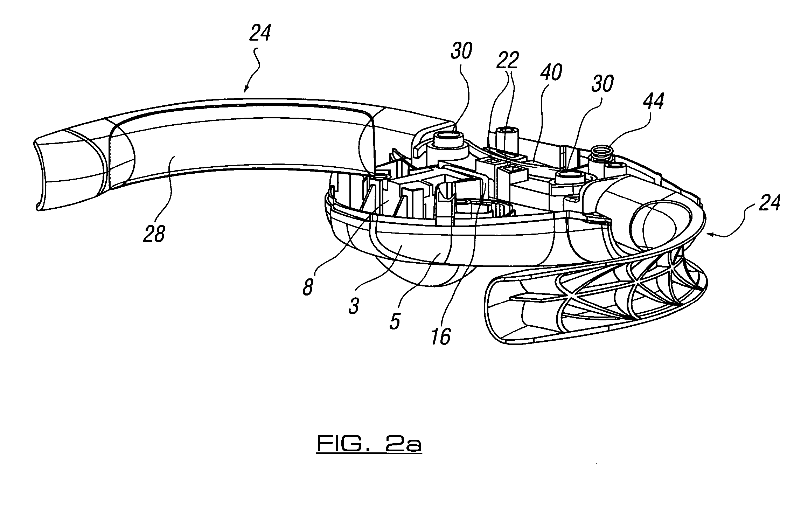

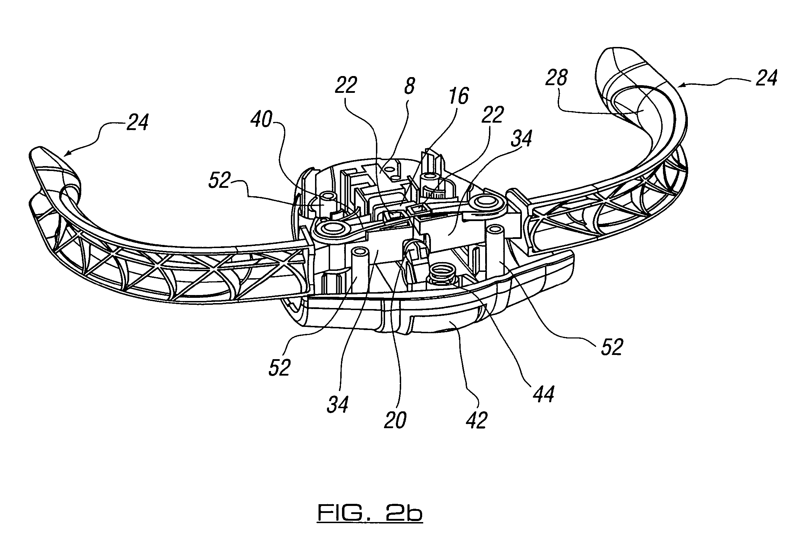

Referring firstly to figures 1a-2b, there is illustrated a switch mechanism 2 for the actuation of an electrical switch 4. The switch mechanism is located in a housing 3, typically comprising two inter-engageable parts, a first part 5 and a second part (not shown for the purposes of clarity).

The electrical switch 4 includes a switch portion 6 which is partially located in housing 8 and which is slidably movable with respect to the housing between a retracted "on position", wherein electrical contact is made, and an extended "off position", wherein no electrical contact is made. When electrical contact is made, an item of electrical apparatus connected to or communicating with the electrical switch 4 is powered.

Switch actuating means 10 is provided for actuating movement of the electrical switch 4 between said on and off positions. Switch actuating means 10 is in the form of a plunger and includes a latch portion 12, a plunger body portion 14 and an abutment plate 16. Resilient biasing means in the form of a spring 18 is provided between the plunger portion 14 and the abutment plate 16. Spring 18 is provided in a compressed condition with the switch mechanism in a non-operating or off condition.

A lip 20 is provided on plunger portion 14 and tab members 22 on levers 24 engage the surface 26 opposite the electrical switch 4 of said lip when the levers 24 are not actuated, thereby preventing movement of plunger portion 14.

Levers 24 have gripping portions 28 for gripping by a user. Each lever 24 is provided with channels 30 at one end thereof which are located over posts 32 in the housing 3 to allow said levers 24 to be pivotally movable. Arm members 34 are joined to tabs 22 such that movement of levers in direction 36 (away from the electrical switch), as a result of a user operating the levers, causes movement of arm members 34 and tabs 22 in an opposite direction 38 (towards the electrical switch).

Resilient biasing means in the form of a leaf spring 40 are provided in connection with levers 24 to bias the levers from the operating condition to a non-operating condition (towards direction 36).

With the switch mechanism fitted to an item of electrical apparatus, such as a lawn mower or power tool, the levers 24 typically substantially follow the curve of the handles of the lawn mower. When the levers 24 are not operated they are located a spaced distance apart from the handles and, when operated, they are moved towards the handles.

Further actuation means are provided in the switch assembly in the form of a user depressable button 42. This button is in contact with resilient biasing means in the form of spring 44 which biases the button to a non-operating position. Spring 44 is located between the underside 46 of button 42 and an inner surface of the housing part (not shown). End 48 of latch portion 12 is located in a latch housing portion 43 of button 42. More specifically, protruding edge 50 of end 48 engages against an inner surface 54 of latch housing portion 43. Depression of button 42 moves the latch housing portion 43 of the spring away from end 48 of latch portion 12, such that protruding edge 50 unlatches from a portion of the housing (not shown) with which it normally abuts. This in turn allows latch portion 12 and thus plunger portion 14 to be capable of movement towards electrical switch 4.

Connection posts 52 are provided in housing part 5 with screw apertures 54 provided therein. With the other housing part assembled with part 5, screws are located through the other housing part and into screw apertures 54 to join the housing parts together.

In use of the switch mechanism, both levers 24 and button 42 have to be actuated substantially simultaneously by a user so that the electrical switch can be moved from an off condition to an on condition. Conversely, release of levers 24 alone will cause the electrical switch to move from an on condition to an off condition.

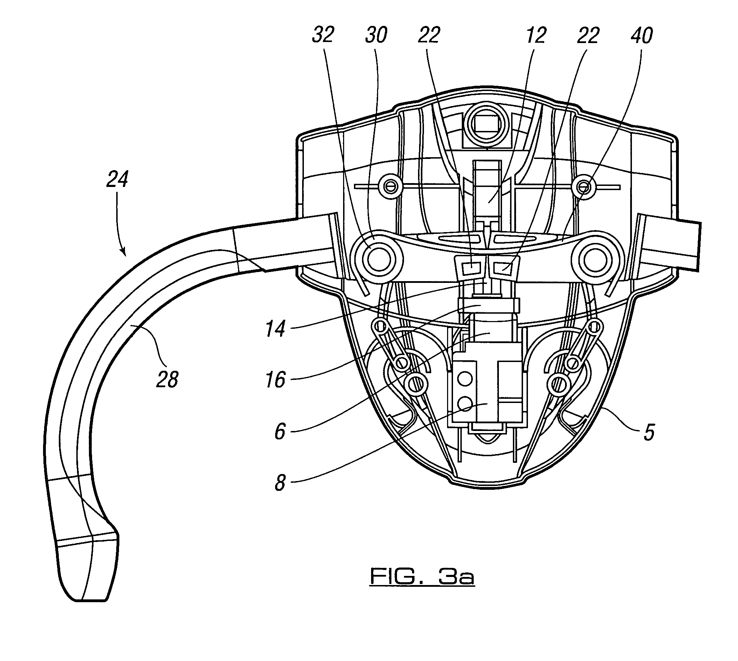

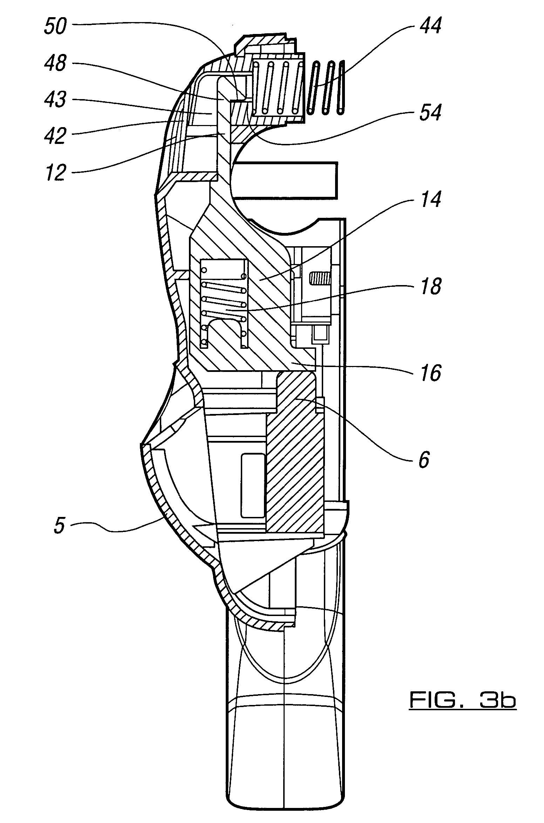

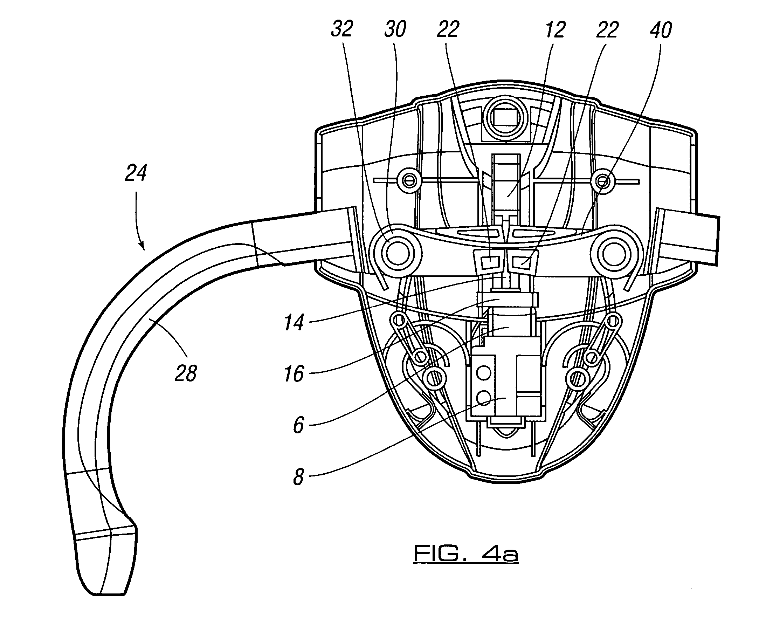

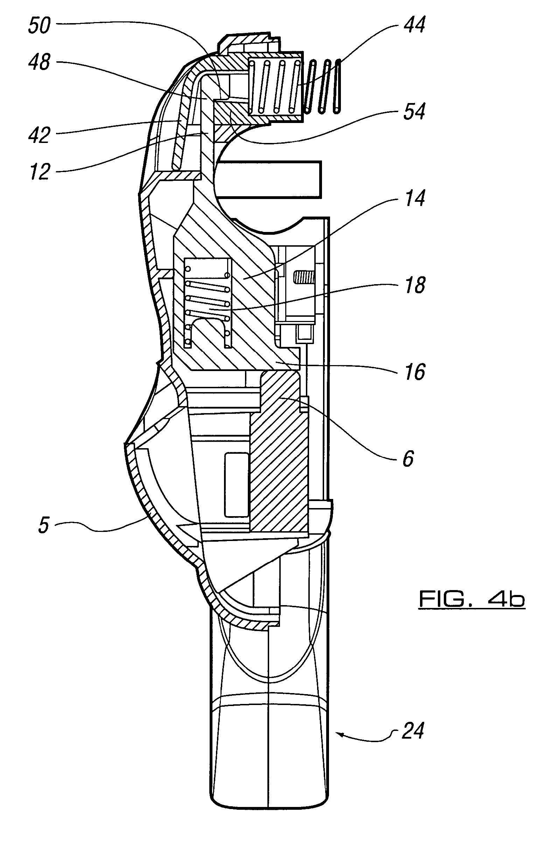

Figures 3a and 3b illustrate the assembled switch mechanism in a start or non-operating condition wherein neither the button 42 nor levers 24 are actuated. The spring 18 is in a substantially compressed condition. If a user depresses button 42 without actuation of levers 24, the latch portion 12 is unlatched but plunger portion 14 cannot be moved due to tabs 22 of levers 24 engaging against surface 26 of lip 20, as shown in figures 4a and 4b.

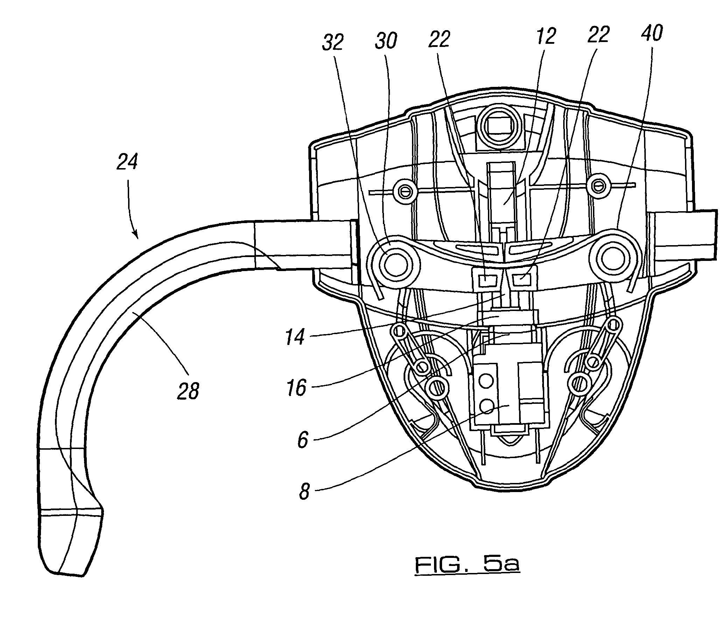

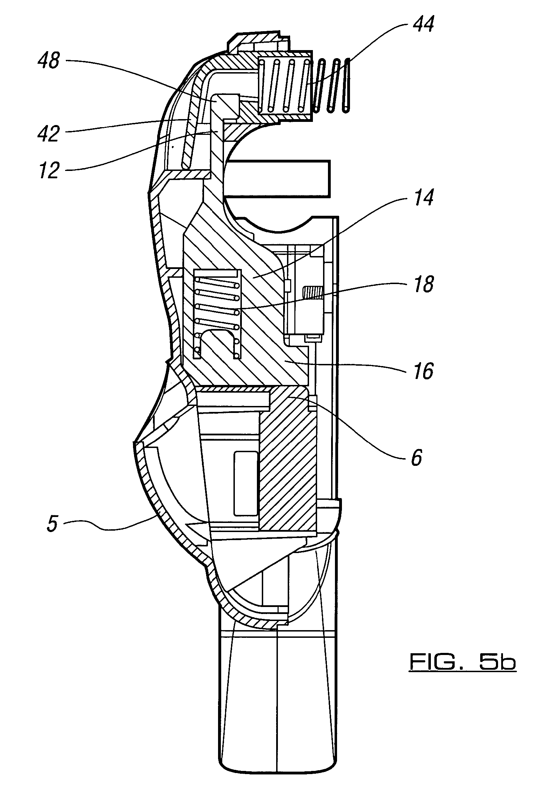

Subsequent movement of levers 24 by the user towards the handles of the electrical apparatus or in a direction 36 moves tabs 22 of levers 24 towards electrical switch 4, thereby releasing engagement of lip 20 and plunger portion 14 from a non-operating condition. The resilient biasing force of compressed spring 18 moves the plunger portion 14 and thus abutment plate 16 towards electrical switch 4. More particularly, abutment plate 16 moves switch portion 6 from an "off condition" to an "on condition" as shown in figures 5a and 5b.

With the electrical switch in the on condition, the user simply has to maintain actuation of levers 24 to maintain the switch in the on condition (i.e. the user can release button 42). This increases the ease with which a user can operate the apparatus but in the event that the user accidentally lets go of the levers, the apparatus will immediately stop.

Release of levers 24 moves the same from an operating condition to a non-operating condition under the resilient biasing force provided by spring 40. This in turn causes tabs 22 to move lip 20 and thus plunger portion 14 to a non-operating condition, thereby compressing spring 28 from a relatively uncompressed state to a compressed state and moving the electrical switch portion 6 to an extended "off condition". Movement of plunger portion 14 to the non-operating condition moves latch portion 12 back into latch engagement housing 43 of button 42, such that when button 42.

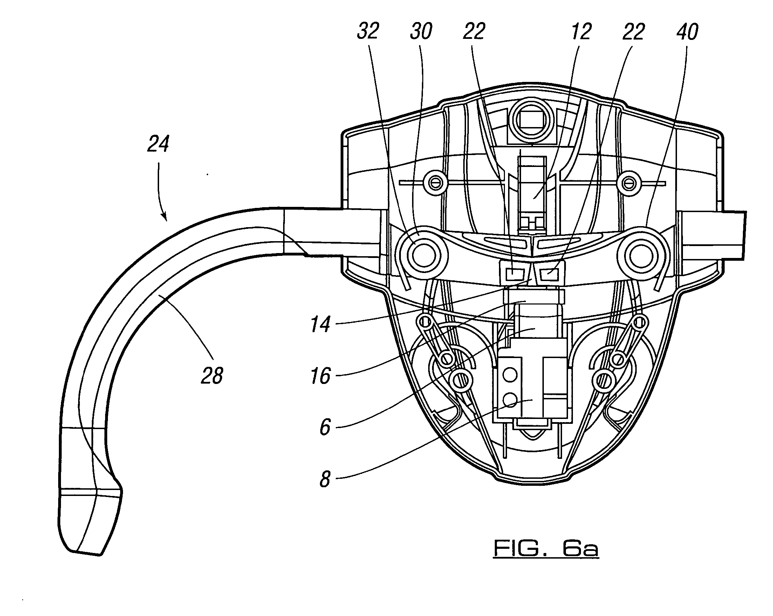

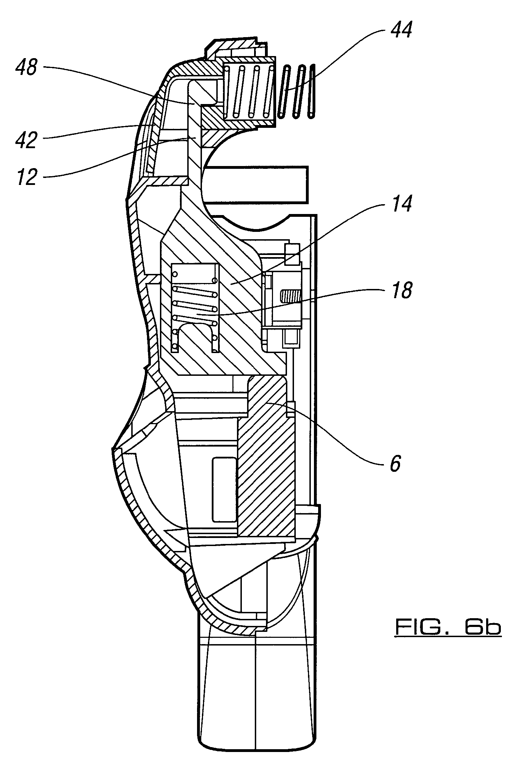

Figure 6a illustrates the switch mechanism when the levers are actuated prior to actuation of button 42. Although engagement of tabs 22 of the levers with lip 20 is released, the latch portion 12 is still engaged in latch engagement housing 43 since button 42 has not been depressed to release the latch. As such, the plunger part 14 cannot move and the electrical switch cannot be actuated.

In the embodiment described, the abutment plate 16, the plunger portion 14 and the latch portion 12 are integrally formed. However, any or all these portions could be joined together or simply in abutting relationship with each other.

## Claims

1. A switch mechanism for the actuation of an electrical switch, said electrical switch movable between an on position, wherein electrical contact is made, and an off position, wherein no electrical contact is made, said switch mechanism including switch actuating means which are movable between first and second positions to move said switch between said on and off positions respectively upon actuation thereof, and resilient biasing means for biasing the switch actuating means for movement from said second position to said first position, **characterised in that** said resilient biasing means are provided in a substantially compressed or biased form when the switch actuating means is in said second position.

2. A switch mechanism according to claim 1 **characterised in that** the resilient biasing means are moved from said compressed or biased form to a substantially uncompressed or unbiased form when the switch actuating means is moved from said second position to said first position.

3. A switch mechanism according to claim 1 **characterised in that** at least first user actuation means are provided in releasable engagement with said switch actuating means, said at least first user actuation means requiring user actuation, to allow the switch actuating means to move from said second position to said first position.

4. A switch mechanism according to claim 3 **characterised in that** said at least first user actuation means does not directly move the resilient biasing means in moving said switch actuation means between said second and first positions.

5. A switch mechanism according to claim 3 **characterised in that** second user actuation means are provided, said second user actuation means requiring actuation in addition to said first user actuation means to allow said switch actuating means to move from said second position to said first position.

6. A switch mechanism according to claim 5 **characterised in that** operation of said first and second user actuation means is required substantially simultaneously to allow the electrical switch to move from an off position to an on condition.

7. A switch mechanism according to claim 1 **characterised in that** the resilient biasing means are provided between said switch actuating means and said electrical switch.

8. A switch mechanism according to claim 1 **characterised in that** the resilient biasing means are provided between at least two portions of the switch actuating means.

9. A switch mechanism according to claim 1 **characterised in that** the resilient biasing means is in the form of a spring.

10. A switch mechanism according to claim 5 **characterised in that** the resilient biasing means remains stationary in said second position until both said first and second user actuation means have been actuated, whereupon the biasing means is able to move under its biasing force.

11. A switch mechanism according to claim 5 **characterised in that** the switch actuating means includes protruding lip means provided thereon and at least a portion of said first and/or second user actuation means engages therewith in said second position and releases engagement therewith in said first position.

12. A switch mechanism according to claim 11 **characterised in that** said first and/or second user actuation means include one or more tab members which engage with said protruding lip means.

13. A switch mechanism according to claim 5 **characterised in that** the first and/or second user actuation means are provided with biasing means to bias the user actuation means from an operating condition to a non-operating condition.

14. A switch mechanism according to claim 5 **characterised in that** the second user actuation means are in the form of one or more levers.

15. A switch mechanism according to claim 14 **characterised in that** the levers are pivotally mounted on the switch assembly or on a part of a housing adjacent the switch assembly.

16. A switch mechanism according to claim 3 **characterised in that** the first and/or second user actuation means are in the form of a button, the button requiring depression to release engagement of the switch actuating means therewith.

17. A switch mechanism according to claim 1 **characterised in that** the switch actuating means is in the form of a plunger.

18. A switch mechanism according to claim 17 **characterised in that** the plunger includes at least a first portion for contacting a portion of the electrical switch and at least a second portion for engagement with the first user actuation means.

19. A switch mechanism according to claim 17 **characterised in that** a body portion of the plunger engages with the second user actuation means.

20. A method of using a switch mechanism according to claim 1 **characterised in that** at least first user actuation means are provided and, upon actuation of said first user actuation means, said switch actuating means is movable under the biasing force provided by the compressed resilient biasing means from a second position to a first position, thereby moving the electrical switch from the off condition to the on condition.

21. A method according to claim 20 **characterised in that** second user actuation means are provided and a user is required to actuate both of said first and second user actuation means to allow said switch actuating means to move from said second position to said first position.

22. A method according to claim 21 **characterised in that** said first and second user actuation means require substantially simultaneous actuation to allow said switch actuating means to move from said second position to said first position.

23. A method according to claim 20 or 21 **characterised in that** release of said first and/or second user actuation means moves said switch actuating means from said first position to said second position.

24. A switch mechanism for the actuation of an electrical switch, said electrical switch movable between an on position, wherein electrical contact is made, and an off position, wherein no electrical contact is made, said switch mechanism including switch actuating means which are movable between first and second positions to move said switch between said on and off positions respectively, at least first user actuation means for releasably engaging said switch actuating means, and resilient biasing means for biasing the switch actuating means for movement from said second position to said first position on actuation of said user actuation means, **characterised in that** said resilient biasing means are provided in a substantially compressed or biased form prior to actuation of said user actuation means.

## Amended claims

### Amended claims in accordance with Rule 86(2) EPC.

**1.** A switch mechanism for the actuation of an electrical switch, said electrical switch movable between an on position, wherein electrical contact is made, and an off position, wherein no electrical contact is made, said switch mechanism including switch actuating means which are movable between first and second positions to move said switch between said on and off positions respectively upon actuation thereof, said switch mechanism further including first and second user actuation means movable between operable and non-operable positions, both the first and second user actuation means requiring actuation to move the same from said non-operational position to said operational position in order to move said switch actuating means from said second off position to said first on position, and first resilient biasing means for biasing the switch actuating means for movement from said second position to said first position, **characterised in that** with the first and second user actuation means in said non-operational conditions and the switch actuating means is in said second off position, said first resilient biasing means are provided in a substantially compressed or biased form.

**2.** A switch mechanism according to claim 1 **characterised in that** the first resilient biasing means are moved from said compressed or biased form to a substantially uncompressed or unbiased form when the switch actuating means is moved from said second off position to said first on position.

**3.** A switch mechanism according to claim 1 **characterised in that** at least the first user actuation means are provided in releasable engagement with said switch actuating means.

**4.** A switch mechanism according to claim 1 **characterised in that** said at least first user actuation means does not directly move the resilient biasing means in moving said switch actuation means between said second and first positions.

**5.** A switch mechanism according to claim 1 **characterised in that** operation of said first and second user actuation means is required substantially simultaneously to allow the electrical switch to move from an off position to an on condition.

**6.** A switch mechanism according to claim 1 **characterised in that** the resilient biasing means are provided between said switch actuating means and said electrical switch.

**7.** A switch mechanism according to claim 1 **characterised in that** the resilient biasing means are provided between at least two portions of the switch actuating means.

**8.** A switch mechanism according to claim 1 **characterised in that** the resilient biasing means is in the form of a spring.

**9.** A switch mechanism according to claim 1 **characterised in that** the resilient biasing means remains stationary in said second position until both said first and second user actuation means have been actuated, whereupon the biasing means is able to move under its biasing force.

**10.** A switch mechanism according to claim 1 **characterised in that** the switch actuating means includes protruding lip means provided thereon and at least a portion of said first and/or second user actuation means engages therewith in said second position and releases engagement therewith in said first position.

**11.** A switch mechanism according to claim 10 **characterised in that** said first and/or second user actuation means include one or more tab members which engage with said protruding lip means.

**12.** A switch mechanism according to claim 1 **characterised in that** the first and/or second user actuation means are provided with biasing means to bias the user actuation means from an operating condition to a non-operating condition.

**13.** A switch mechanism according to claim 1 **characterised in that** the second user actuation means are in the form of one or more levers.

**14.** A switch mechanism according to claim 13 **characterised in that** the levers are pivotally mounted on the switch assembly or on a part of a housing adjacent the switch assembly.

**15.** A switch mechanism according to claim 1 **characterised in that** the first and/or second user actuation means are in the form of a button, the button requiring depression to release engagement of the switch actuating means therewith.

**16.** A switch mechanism according to claim 1 **characterised in that** the switch actuating means is in the form of a plunger.

**17.** A switch mechanism according to claim 16 **characterised in that** the plunger includes at least a first portion for contacting a portion of the electrical switch and at least a second portion for engagement with the first user actuation means.

**18.** A switch mechanism according to claim 16 **characterised in that** a body portion of the plunger engages with the second user actuation means.

**19.** A method of actuating a switch mechanism of an electrical switch, said electrical switch movable between an on position, wherein electrical contact is made, and an off position, wherein no electrical contact is made, said switch mechanism including switch actuating means which are movable between first and second positions to move said switch between said on and off positions respectively upon actuation thereof, said switch mechanism further including first and second user actuation means movable between operable and non-operable positions, and first resilient biasing means for biasing the switch actuating means for movement from said second position to said first position, said method including the steps of actuating the first and second user actuation means to move the same from said non-operational position to said operational position in order to move said switch actuating means from said second off position to said first on position, **characterised in that** with the first and second user actuation means in said non-operational conditions and the switch actuating means is in said second off position, said first resilient biasing means are provided in a substantially compressed or biased form.

**20.** A method according to claim 20 **characterised in that** said first and second user actuation means require substantially simultaneous actuation to allow said switch actuating means to move from said second position to said first position.

**21.** A method according to claim 20 **characterised in that** release of said first and/or second user actuation means moves said switch actuating means from said first position to said second position.
